# EUROPEAN PATENT SPECIFICATION

(11) **EP 1 137 477 B1**
(45) Date of publication and mention of the grant of the patent: **04.08.2010**
(21) Application number: 99961621.2
(22) Date of filing: 10.11.1999
(51) Int. Cl.: B01D 53/22, B01D 63/08

(54) **HYDROGEN SEPARATION MEMBRANE ASSEMBLY**
MEMBRANANORDNUNG ZUR TRENNUNG VON WASSERSTOFF
ASSEMBLAGE DE MEMBRANE DE SEPARATION D'HYDROGENE

(30) Priority: 10.11.1998 US 107784 P; 21.10.1999 US 422505
(43) Date of publication of application: 04.10.2001
(73) Proprietor: ATI Properties, Inc., Albany, OR 97321-0580 (US)
(72) Inventor: FROST, Chester, B., Corvallis, OR 97330 (US); KRUEGER, Brett, R., Lebanon, OR 97355 (US)
(74) Representative: Baker, Colin John
(86) International application number: PCT/US1999/026527
(87) International publication number: WO 2000/027507

(56) References cited:
- EP-A- 0 783 919
- US-A- 4 699 637
- US-A- 5 259 870
- PATENT ABSTRACTS OF JAPAN vol. 017, no. 400 (C-1089), 27 July 1993 (1993-07-27) & JP 05 076738 A (MITSUBISHI HEAVY IND LTD), 30 March 1993 (1993-03-30)

## Description

### BACKGROUND OF THE INVENTION

### 1. Field of the Invention

The present invention relates to apparatuses and methods for separation of a desired fluid from a fluid mixture. More particularly, the present invention is generally directed to a fluid separation assembly having a membrane permeable to a desired fluid and a wire mesh membrane support that supports the permeable membrane and has a barrier that prevents intermetallic diffusion bonding. This invention relates to metal membranes used for separating hydrogen gas from a mixture of gases.

### 2. Description of the Invention Background

Several metal foils have been shown to be suitable for the separation of hydrogen gas from a gas mixture by a mechanism of diffusion or transfer of hydrogen ions or protons through the normally non-porous metal foil with molecular hydrogen being recoverable on the opposite side of the foil from the side contacting the gas mixture. Many workers in this field have employed different metals, metal alloys and different structures to optimize the separation of the hydrogen component of a gas mixture or to purify hydrogen under the wide variety of conditions that can be present in a hydrogen containing gas stream at or near the conditions for hydrogen production. The U.S. Patents to Johann G.E. Cohn 3,238,700 and Leonard R. Rubin 3,172,742 are exemplary of the early work in this field which employed alloys of palladium to overcome some of the detrimental changes which can occur in the metal foil when subjected to substantial temperature changes in the presence of hydrogen, when produced typically by gas phase reactions such as the water gas shift reaction (steam over heated carbon or carbon containing materials), or the decomposition of hydrogen containing compounds. (Canadian Patent No. 579,535).

It is therefore an objective of the present invention to provide a supported hydrogen permeable metal or metal alloy foil-containing structure which can operate successfully in the environments present in hydrogen production as well as being suitable for separation of hydrogen from gas streams containing hydrogen produced by any means.

Generally, when separating a gas from a mixture of gases by diffusion, the gas mixture is typically brought into contact with a nonporous membrane which is selectively permeable to the gas that is desired to be separated from the gas mixture. The desired gas diffuses through the permeable membrane and is separated from the other gas mixture. A pressure differential between opposite sides of the permeable membrane is usually created such that the diffusion process proceeds more effectively, wherein a higher partial pressure of the gas to be separated is maintained on the gas mixture side of the permeable membrane. It is also desireable for the gas mixture and the selectively permeable membrane to be maintained at elevated temperatures to facilitate the separation of the desired gas from the gas mixture. This type of process can be used to separate hydrogen from a gas mixture containing hydrogen. Thus, in this application, the permeable membrane is permeable to hydrogen and is commonly constructed from palladium or a palladium alloy. The exposure to high temperatures and mechanical stresses created by the pressure differential dictates that the permeable membrane be supported in such a way that does not obstruct passage of the desired gas through the membrane.

One type of conventional apparatus used for the separation of hydrogen from a gas mixture employs a woven refractory-type cloth for supporting the permeable membrane during the separation process. The disadvantage of this type of conventional membrane support is that the cloth support is susceptible to failure when it is exposed to high mechanical stresses associated with the differential pressure required to effect diffusion through the membrane material.

Another conventional permeable membrane support is a metal gauze structure placed adjacent to the permeable membrane. The disadvantage of this type of support is that intermetallic diffusion bonding occurs between the membrane support and the permeable membrane when they are exposed to high pressures and high temperatures. The high pressure tends to compress the permeable membrane and the metal gauze together and the high temperatures tend to deteriorate the chemical bonds of those materials. Such undesirable condition results in migration of the molecules of the permeable membrane to the metal gauze membrane and the migration of molecules of

the metal gauze membrane to the permeable membrane until a bond is formed between those two structures. This intermetallic diffusion bonding results in a composite material that is no longer permeable by the hydrogen gas.

EP-A-0783919 discloses a construction of composite hydrogen separation elements and modules utilising the same. At least one common-axis hole is provided through all components of the separation element and there is also provided a gas-tight seal, for example by welding, brazing, or diffusion bonding, around the periphery of the hole or holes through a coating metal layer of the element. In an embodiment a ceramic or glass fibre layer is used to present intermetallic diffusion

US-46 99 637 discloses a hydrogen permeation membrane reinforced on both sides with a wire mesh comprising a nickel or nickel alloy coating with a thickness of a few microns.

Thus, the need exists for a method and apparatus for separating a desired fluid from a fluid mixture that can reliably withstand high operating pressures and temperatures.

Another need exists for a permeable membrane and support arrangement for separating a desired fluid from a fluid mixture, wherein the permeable membrane is not susceptible to breakage or intermetallic diffusion bonding.

Yet another need exists for a method of supporting a membrane that is permeable to a fluid, wherein the fluid permeable membrane is exposed to high temperatures and high pressures.

### BRIEF DESCRIPTION OF THE DRAWINGS

For the present invention to be readily understood and practiced, preferred embodiments will be described in conjunction with the following figures wherein:
FIG. 1 is an isometric view of a membrane assembly according to the present invention before welding;
FIG. 2 is a top view of the membrane assembly of FIG. 1;
FIG. 2A is a sectional view of the membrane assembly of FIG. 2 taken along the lines and arrows 2A;
FIG. 3 is a partial sectional view in perspective of the edge detail of the membrane of the present invention;
FIG. 4 is a partial cut away view of the membrane assembly of the present invention;
FIG. 5 is a top isometric view of a fluid separation assembly of the present invention;
FIG. 6 is an exploded isometric view of the fluid separation assembly of the present invention shown in FIG. 5;
FIG. 7 is an exploded isometric view of the female permeable membrane subassembly of the present invention shown in FIG. 5;
FIG. 8 is an exploded isometric view of the male permeable membrane subassembly of the present invention shown in FIG. 5;
FIG. 9 is a sectional isometric view of the fluid separation assembly of the present invention;
FIG. 10 is an enlarged view of section A of the fluid separation assembly shown in FIG. 9;
FiG.11 is a cross-sectional view of the fluid separation assembly of the present invention shown in FIG. 5 taken along line 11-11;
Fig. 12 is an isometric sectional diagrammatical view of a module employing several fluid separation assemblies of the present invention; and
FIG.13 is an enlarged section B of the module shown in FIG. 12.

### BRIEF SUMMARY OF THE INVENTION

The invention provides a fluid separation assembly in accordance with claim 1 of the appended claims.

The hydrogen permeable membrane structure of the present invention comprises a disc shaped supported metal foil sized to overlap a support plate or disc capable of passing product gases diffused or transferred through the metal foil, which disc terminates at its periphery with a pair of beveled sheet metal support rings overlying the support plate and a pair of beveled sheet metal capture rings matched in shape to the beveled support rings to capture the hydrogen permeable membrane foil there between, the assembly terminating in an edge formed by the edges of the capture rings and support rings with the captured foil, which edge is then hermetically scaled by a weld bead joining all of the rings together. The assembly includes means for centrally removing the separated hydrogen from the support plate.

The present invention provides a fluid separation assembly having a fluid permeable membrane and a wire mesh membrane support adjacent the fluid permeable membrane, wherein the wire mesh membrane support has an intermetallic diffusion bonding barrier.

The present invention further provides a method for separating a desired fluid from a fluid mixture in accordance with claim 14 of the appended claims. Other details, objects and advantages of the present invention will become more apparent with the following description of the present invention.

### DETAILED DESCRIPTION

The present invention will be described below in terms of apparatuses and methods for separation of hydrogen from a mixture of gases. It should be noted that describing the present invention in terms of a hydrogen separation assembly is for illustrative purposes and the advantages of the present invention may be realized using other structures and technologies that have a need for such apparatuses and methods for separation of a desired fluid from a fluid mixture containing the desired fluid.

It is to be further understood that the Figures and descriptions of the present invention have been simplified to illustrate elements that are relevant for a clear understanding of the present invention, while eliminating, for purposes of clarity, other elements and/or descriptions thereof found in a hydrogen separation assembly. Those of ordinary skill in the art will recognise that other elements may be desirable in order to implement the present invention. However, because such elements are well known in the art, and because they do not facilitate a better understanding of the present invention, a discussion of such elements is not provided herein.

In the manufacture of a metal membrane based gas separation device, it is necessary to eliminate all possible leak paths between the feed side of the membrane and the product or permeate side of the membrane. This is done to maintain the highest possible purity of the product stream. Typically, a membrane used in this type of a device is very thin and consequently of low mechanical strength. A mechanical support, placed under the membrane on the product side, allows the membrane to function under high differential pressures at elevated temperatures. If membrane material is placed on both sides of the mechanical support, then the support itself is loaded under compressive stress during operation. Using this type of a design, the mechanical support can be less robust than would be necessary if it were loaded from one side only.

The present invention provides a way of sealing each membrane "half" independent of the mechanical support so that all possible leak paths are eliminated. If both membrane sheets are joined at their periphery using a single seam type weld to join parts, the probability of a leak through a welded seam is substantially reduced.

Many methods of the joining of thin metal foils used for hydrogen permeable membranes are known. Efforts to achieve a hermetic seal of thin foil type membranes with welding, brazing or diffusion bonding are described in U.S. Patent No. 5,645,626. Additional efforts at a brazed joint are described in Canadian Patent Application Number 436,620. The problems with a brazed type joint occur because of the possibility of the brazing alloy contaminating the membrane surface during the brazing operation with metals, flux compounds, or other substances that would interfere with the membranes ability to transport hydrogen during operation.

Diffusion bonding of membrane foils as a means of attachment to fabricated support members is limited by the requirement that a hermetic seal in a bonded joint can only occur when the material in the bonding zone enters into the liquid stage at some time during the bonding process.

The present invention involves the joining of two thin foil membranes (approx. 25 micron/0.001 inch) using commercially available welding technology. A single weld joint hermetically seals both membranes in one pass, reducing the probability of a failed weld joint due to weld induced stress, contamination present in the base metals, and of porosity in the finished weld by approximately 50%. The completed joint has advantages over present technology in the areas of reliability and ease of manufacturing.

The hydrogen separation membrane of the present invention is therefore an improvement over the membrane structure described in U.S. Patent No. 5,139,541.

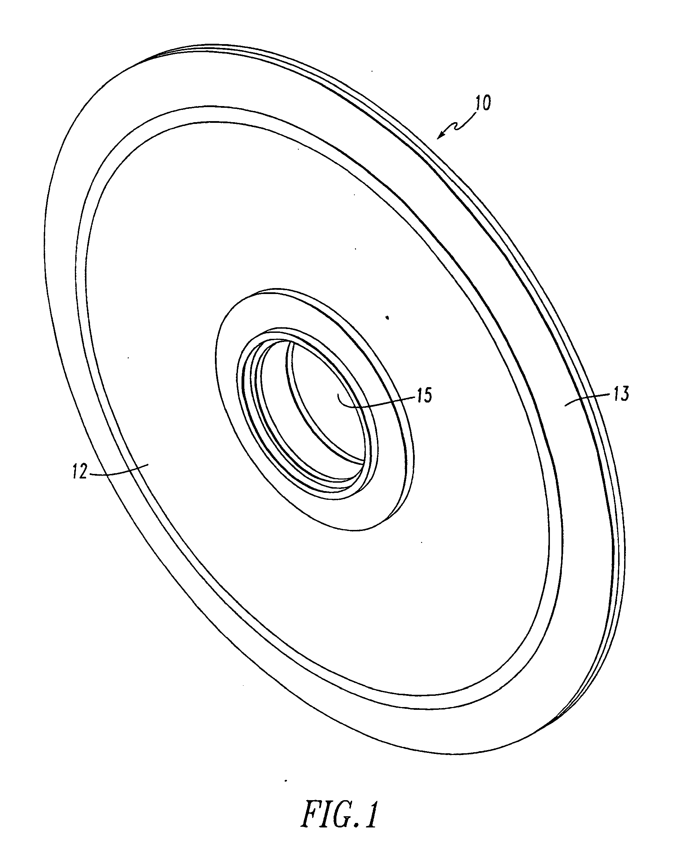

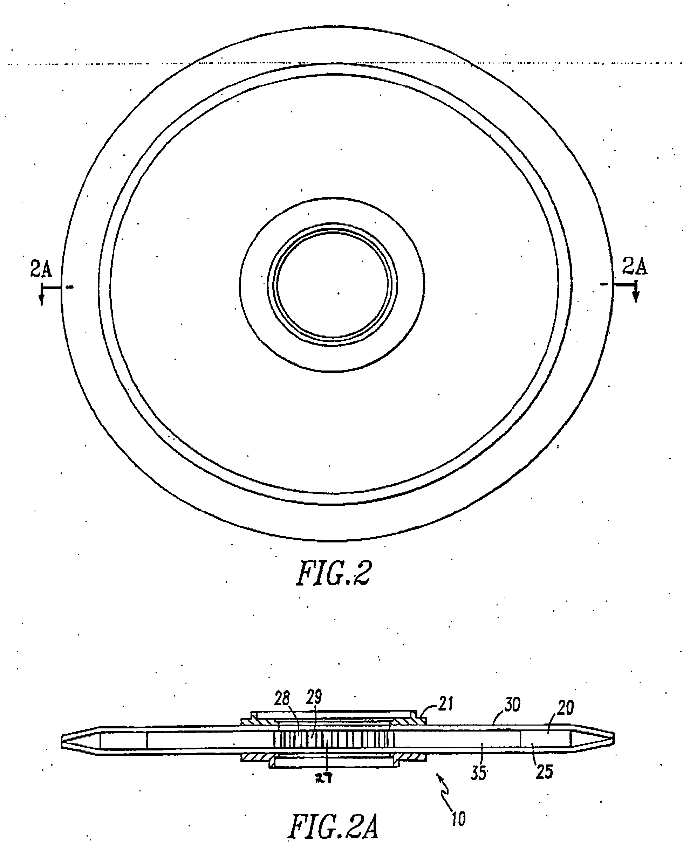

The membrane support structure 10 of the present invention is, as shown in Fig. 1, a disc shaped member designed to contact the hydrogen containing gas with both of its exterior surfaces. The exposed exterior surface 12 of the foil is sandwiched under the outer ring 13 in a manner more fully described hereinafter. The central hole communicates with the interior space of the disc for removal of the hydrogen. The reverse side of the disc (not shown) is identical as can be seen on Figs. 2 and 2A. The internal support disc has a hole corresponding to the interior of the central support structure 21. The disc 20 has a solid perimeter which is shown in section at 25. Slots are provided in the disc which radiate radially outward from its central hole to terminate at the edge of the outer perimeter. The edges of the slots are shown schematically at 27,28 and 29 for example. The foil 30 is received on both faces of the disc 10. Hydrogen will be transported from the exterior of the disc 10 through the foil 30 and into a slot 35 in the support disc from where it can be removed through a central conduit (not shown) since the edges of the slots (for example 27, 28, 29) communicate with the opening (hole 15) and the central conduit. Other means for permitting the exhaust of the hydrogen can be provided i.e. such as grooves instead of slots or surface texturing or the like.

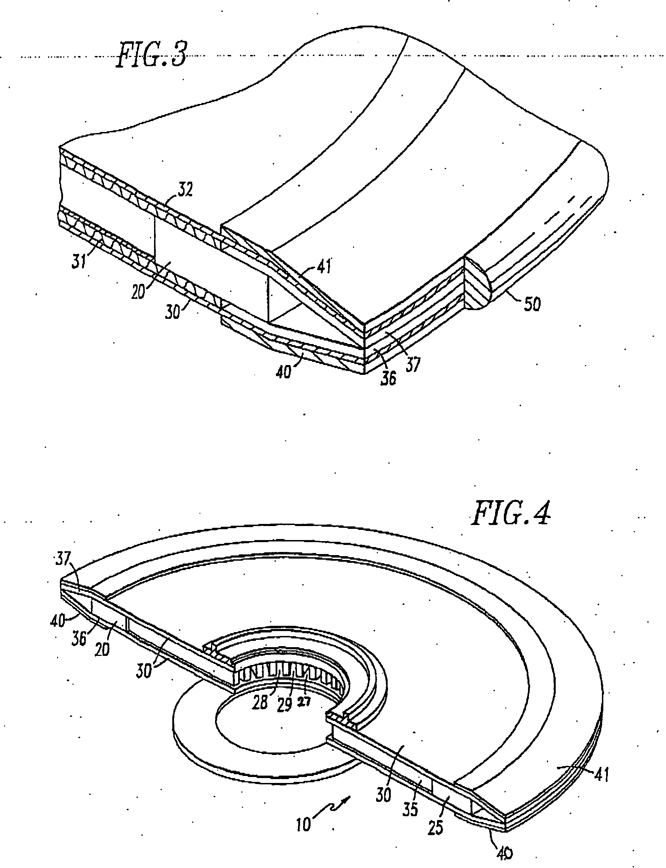

As previously described, the edge structure for the disc is critical for achieving a gas tight seal. Likewise, the foil preferably will be supported on an inert fabric such as woven fiberglass or a woven or non-woven ceramic material. Referring now to Fig. 3, the support disc 20 is covered on both sides with a layer of inert fabric 31. The hydrogen permeable metal membrane foil 30 is received over the fabric 31. A pair of sheet metal support rings 36 and 37 are affixed to the support disc 20 around its periphery so as not to occlude the slots. The beveled support rings 36 and 37 are dimensional to meet and form an edge. The foil 30 and 32 are positioned to overlay the fabric 31 received on the fabric 31 supported by the support disc 20. A pair of sheet metal capture rings 40 and 41 are sized to mate with the support rings 36 and 37 respectively and capture the foil 30 and 32 between the support rings 36 and 37 and the metal capture rings 40 and 41. A weld bead 50 joins all of the rings together. The disc 20, capture rings 40 and 41, and support rings 36 and 37 are all made from materials which are compatible with the end use environment for the membrane discs.

This invention differs from the present technology by reducing the total length of welded or sealed joints for a given pair of membranes with comparable outside diameters. The invention also allows dimensional changes due to the different coefficients of thermal expansion used in the materials of the welded joint and dimensional changes encountered when the membrane material is saturated with hydrogen which occurs independently of other components in the assembly. This has the effect of further reducing stress on the membrane under operating conditions. Additionally, this type of joint allows for the selection of lower cost materials of construction that are not physically a part of the welded joint further reducing the cost of manufacture.

The fabrication of these parts into a completed assembly is accomplished by assembly into a welding fixture that clamps the parts together. The membrane material is mechanically forced between the bottom membrane support and the membrane cover rings during clamping into the weld fixture so that the outer edges are held tightly together in tight contact with the membrane. This clamped assembly is then seam welded at the outer perimeter. The single weld bead fuses the outer edges of the upper and lower bottom membrane support rings, the upper and lower membranes, and the upper and lower membrane cover rings into a leak proof unit.

The actual seam weld can be effected by a number of commercially available technologies, including but not limited to laser, electron beam, and tungsten inert gas (TIG) welding. The welded seam can be achieved with or without the addition of filler material to the weld zone. This type of weld may have other applications requiring welding of thin metal foils for other uses outside the membrane application described.

An assembly of forty-three individual discs prepared as described herein, containing approximately 1,86 square metres (twenty square feet) of total membrane area were operated at 300° C and 4.14MPa (600 psig) for a total of 200 hours with no noticeable decline in hydrogen separation function. The permeate side of the assembly was operated at a pressure of from about 1.03 to 2.08 MPa (15 to 30 psig) subjecting the assembly to a differential pressure across each membrane of 3.93 to 4.03 MPa (570-585 psig). The assembly was also subjected to about 30 cycles of operation from ambient conditions of temperature and pressure to the operating temperatures and pressures described without failure of the welded joint.

The limitations to maintaining weld integrity and thus a hermetically sealed weld joint are primarily in the selection of materials for the bottom support and top cover rings that are compatible with the thin metal foil to be welded and selecting the proper weld parameters of the equipment used to make the weld.

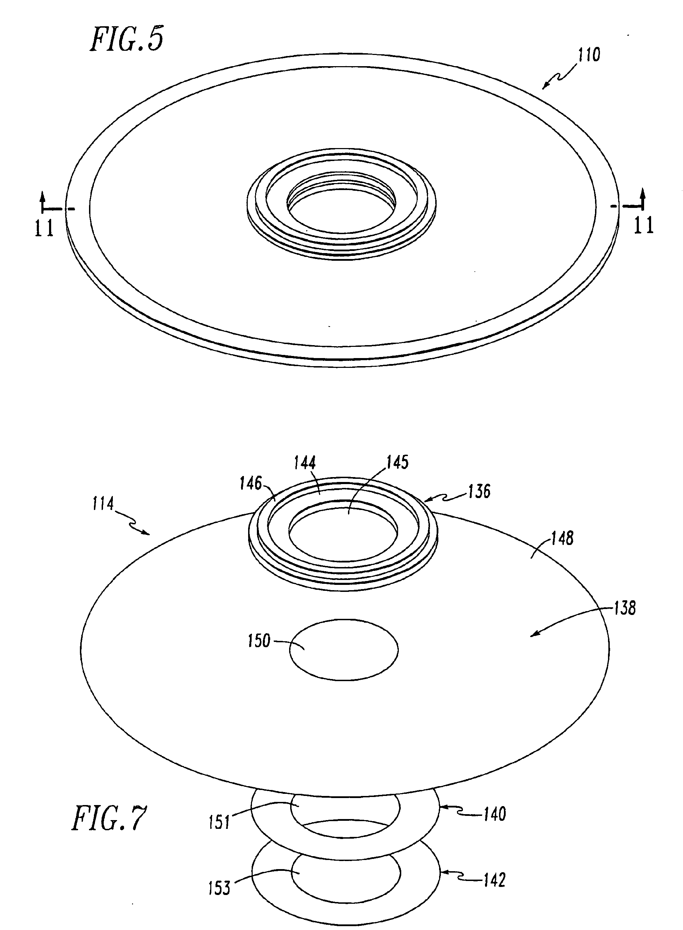

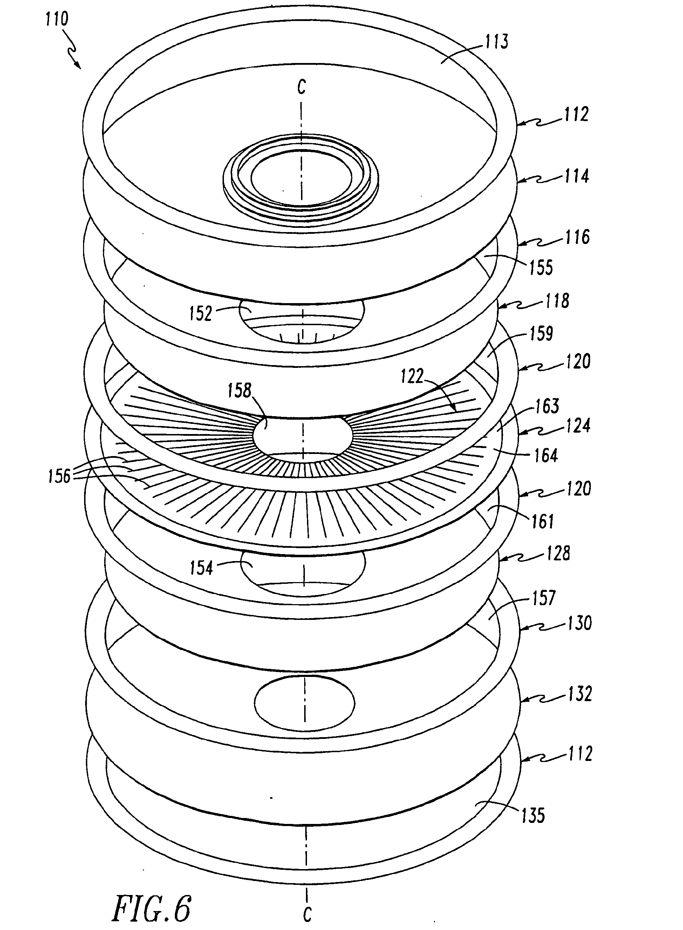

FIGS. 5 and 6 illustrate one embodiment of the fluid separation assembly 110 of the present invention, wherein FIG. 6 is an exploded view of the fluid separation assembly 110 shown in FIG. 5. The fluid separation assembly 110 comprises first membrane retainers 112, a female membrane subassembly 114, a first membrane gasket 116, a first wire mesh membrane support 118, second membrane retainers 120, a slotted permeate plate 122, a permeate rim 124, a second wire mesh membrane support 128, a second membrane gasket 130 and a male membrane subassembly 132. In one embodiment, the first retainers 112 may be substantially flat ring members having an outside diameter equal to the diameter of the female and male membrane subassemblies 114 and 132 and a thickness of between approximately 0.0025cm (0.001 inches) and 0.15cm (0.060 inches) The first membrane retainers 112 each have a centrally disposed opening 113 and 135. The first membrane retainers 112 may be made from Monel 400 (UNS N 04400); however, other materials that are compatible with the welding process, discussed below, may also be used. It will also be appreciated that while first retainers 112 are shown as comprising substantially annular members they may have other desired shapes and other thicknesses.

FIG. 7 is an exploded view of a female permeable membrane subassembly 114. In this embodiment, female membrane subassembly 114, comprises a female gasket seat 136, a hydrogen permeable membrane 138, an inner diameter membrane gasket 140 and a center support washer 142. In this embodiment, the female gasket seat 136 is a substantially flat ring member 144 having a raised face 146 extending around the ring member 144 and a centrally disposed opening 145. It will be appreciated that while this embodiment is shown with gasket seats with this configurations or materials that may be used. The female gasket seat 136 may be made from Monel 400; however, other materials such as nickel, copper, nickel alloys, copper alloys, or other alloys that provide for compatible fusion with the chosen permeable membrane material during welding may be used. In this embodiment, the hydrogen permeable membrane 138 is a substantially planar member having a circular configuration, opposing sides 148 and a centrally disposed circular opening 150. The inner diameter membrane gasket 140 is also a flat ring member having a centrally disposed opening 151. Also in this embodiment, the inner diameter membrane gasket 140 may be made from Monel 400 (UNS N 04400); however, other materials such as nickel, copper, nickel alloys, copper alloys, or other alloys that provide for compatible fusion with the chosen permeable membrane material during welding may be used. The center support washer 142 is a flat ring member having a centrally disposed opening 153. The center support washer 142 may be made of Monel 400 (UNS N 04400); however, other materials such as nickel, copper, nickel alloys, copper alloys, or other alloys that provide for compatible fusion with the chosen permeable membrane material or alloy during welding may be used.

Referring back to FIG. 6, in this embodiment, the first and second membrane gaskets 116 and 130 are each a substantially flat ring member having a centrally-disposed opening 155 and 157, respectively. In this embodiment, the first and second membrane gaskets 116 and 130 may be made from Monel 400 alloy (UNS N 004400), nickel, copper, nickel alloys, copper alloys or other precious alloys or other alloys compatible with the weld that is used to join the components of the fluid separation assembly 110 and which is discussed below. The first and second membrane gaskets 116 and 130 may have a thickness of between approximately 0.001cm (0.0005 inches) to 0.013 cm (0.005 inches). However, other gasket thicknesses could be employed.

Also in this embodiment, the first and second wire mesh membrane supports 118 and 128 are planar, ring-shaped members having centrally disposed openings 152 and 154, respectively. The wire mesh membrane supports 118 and 128 may be made from 316L stainless steel alloy with a mesh count of between approximately 7.394 mesh per centimetre (19 to 1,000 mesh per inch) wherein the mesh count is chosen to be adequate to support the hydrogen permeably membranes 138 and 162. The style of woven mesh may include a standard plain square weave, twill square weave, rectangular plain or twill weave or triangular plain or twill weave. One example of a mesh count that may be used is 19 mesh per centimetre (49 mesh per inch). The wire mesh membrane supports 118 and 128 may be made of steel alloys, stainless steel alloys, nickel alloys or copper alloys. The wire mesh may be coated with a thin film that prevents intermetallic diffusion bonding (i.e, an intermetallic diffusion bonding barrier). The intermetallic diffusion bonding barrier may be a kin film containing at least one of an oxide, a nitride, a boride, a silicide, a carbide, or an aluminide and may be applied using a number of conventional methods, including but not limited to, physical vapor deposition (PVD), chemical vapor disposition, and plasma enhanced vapor deposition. For example, the method of reactive sputtering, a form ofPVD, can be used to apply a thin oxide film of between approximately 600-700 angstroms to the wire mesh membrane supports 118 and 128. A variety of oxides, nitrides, borides, silicides, carbides and aluminides may also be used for the thin film as well as any thin films that will be apparent to those of ordinary skill in the art. Using this form of PVD results in a dense amorphous thin film having approximately the same mechanical strength as the bulk thin film material.

Also in this embodiment, the second membrane retainers 120 each are a substantially flat ring member. One retainer 120 has a centrally disposed opening 159 and retainer 120 has it centrally disposed opening 161. See FIG. 6. These retainers 120 may be the same thickness as the first and second wire mesh membrane supports 118 and 128. The second membrane retainers 120 may be made from a material that is compatible with the weld, discussed below, such as Monel 400 (UNS N 004400) and nickel, copper, nickel alloys, copper alloys, precious metals or alloys, or other alloys that provide for compatible fusion with the chosen membrane material or alloy during welding may be used.

In this embodiment, the slotted permeate plate 122 is a steel plate having a plurality of slots 156 extending radially and outwardly from a central opening 158 in the direction of the periphery of the slotted permeate plate 122. The number of slots 156 in a slotted permeate plate 122 may range from approximately 10 to 72. However, other suitable slot densities could conceivably be employed. The permeate plate rim 124 is a substantially flat ring member having a centrally disposed opening 163 and an inner diameter larger than the outer diameter of the slotted permeate plate 122. The permeate plate rim 124 is made from Monel 400 (UNS N 04400); however, other materials can also be used such as nickel, copper, nickel alloys, copper alloys, precious metals or alloys or other alloys that provide for compatible fusion with the chosen membrane material or alloy during welding.

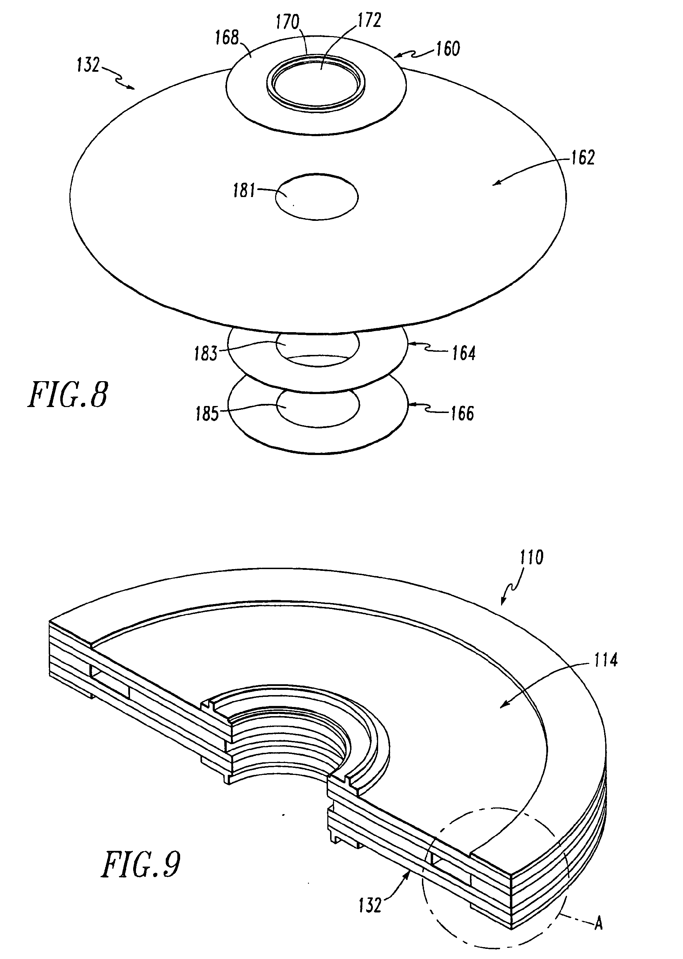

FIG. 8 is an exploded view of the male permeable membrane subassembly 132. The male membrane subassembly 132 comprises a male gasket seat 160, a hydrogen permeable membrane 162, an inner diameter membrane gasket 164, and a center support washer 166. The hydrogen permeable membranes 138 and 162 may be made from at least one hydrogen permeable metal or an alloy containing at least one hydrogen permeable metal, preferably selected from the transition metals of groups VIIB or VIIIB of the Periodic Table. The hydrogen permeable membrane 162, the inner diameter membrane gasket 164, and the center support washer 166 are similar in structure to the hydrogen permeable membrane 138, the inner diameter membrane gasket 140 and the center support washer 142, respectively, discussed above. The male gasket seat 160 is a substantially planar ring member 168 having a circular protuberance 170 extending around a centrally disposed opening 172. In this embodiment, the female gasket seat 136 and the male gasket seat 160 are made of a high strength alloy material that is compatible with the weld such as Monel 400. The inner diameter member gaskets 140 and 164 are made from the same materials as the first and second outer diameter membrane gaskets 116 and 130, discussed above.

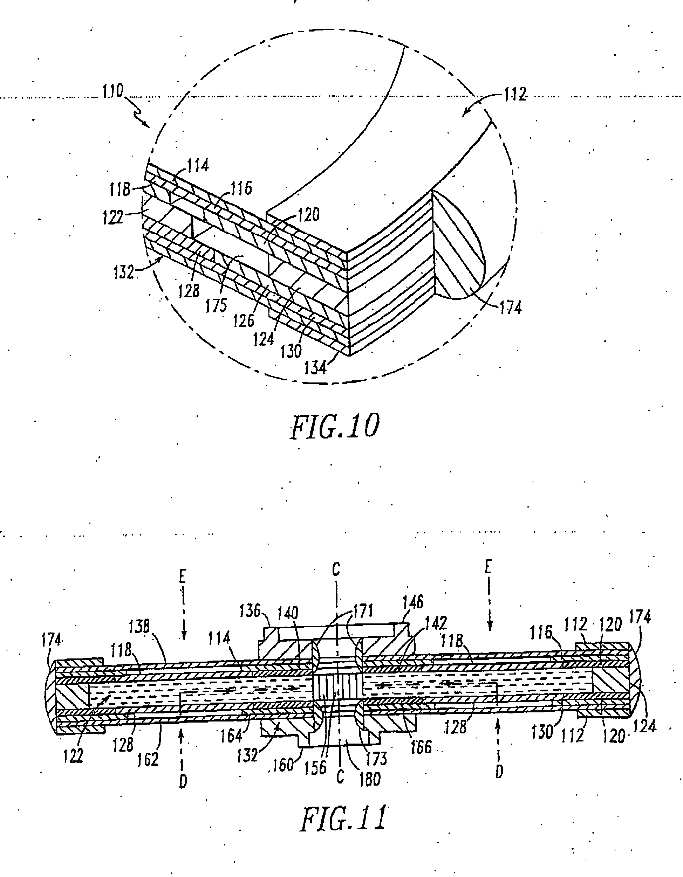

FIGS. 9 through 11 are various cross-sectional views of the assembled fluid separation assembly 110 of the present invention, wherein FIG. 10 is an enlarged view of section A of the fluid separation assembly 110 shown in FIG. 9, and FIG. 11 is a cross-sectional plan view of the assembled fluid separation assembly 110. When assembling the components of the fluid separation assembly 110 shown in FIGS. 6-8, the female membrane subassembly 114 and the male membrane subassembly 132 are initially assembled. The female gasket seat 136, the permeable membrane 138, the inner diameter membrane gasket 140 and the center support washer 142 are placed adjacent one another, as shown in FIG. 11, such that their central disposed openings 145, 150, 151 and 153, respectively, are coaxially aligned. A first weld 171, shown in FIG. 11, is placed at the openings thereof. The first weld 171 takes the form of a weld bead creating a hermetic seal between the female gasket seat 136, the permeable membrane 138, the inner diameter membrane gasket 140 and the center support washer 142. The weld 171 can be effected by a number of commercially available technologies, including but not limited to, lasers, electron beam and tungsten inert gas (TIG) welding. Alternative joining technologies such as brazing or soldering may also be employed with the desired result being a gas tight bond between the gasket seat 136 and the permeable membrane 138. Likewise, the components of the male membrane subassembly 132, which include the male gasket seat 160, the permeable membrane 162, the inner diameter membrane gasket 164 and the center support washer 166 are also placed adjacent one another, as shown in FIG. 11, such that their centrally disposed openings 172, 181, 183 and 185 are coaxidly aligned with each other and a second weld bead 173, shown in FIG. 11, is placed around the circumference of the openings 172, 181, 183 and 185 thereof. As stated above, the weld 173 can be effected by a number of commercially available technologies, including but not limited to, laser, electron beam, and tungsten inert gas (TIG) welding.

After the components of the female membrane subassembly 114 and the components of the male membrane subassembly 132 have each been connected by the welds 171 and 173, respectively, they are assembled with the other components described above to form the fluid separation assembly 110. As shown in FIG. 6, the first and second retainer members 112 and 120, the female and male membrane subassemblies 114 and 132, the first and second outer diameter gaskets 116 and 130, the first and second wire mesh membrane supports 118 and 128, the slotted permeate plate 122 and the permeate rim 124 are aligned such that their centrally disposed openings are coaxially aligned. As shown in FIG. 11, these components are retained in that configuration by placing a weld 174 at the outer periphery of the first and second retainer members 112 and 120, the female, and male membrane subassemblies 114 and 132, the first and second outer diameter membranes gaskets 116 and 130, and the slotted permeate rim 124. Alternatively, these parts could be assembled such that their centrally disposed openings are coaxially aligned, as shown in FIG. 11, and connected to one another by performing a brazing or soldering operation at the outer periphery of the first and second retainer members 112 and 120, the female and male membrane subassemblies 114 and 132, the first and second outer diameter membrane gaskets 116 and 130 and the slotted permeate rim 124. As seen in FIG. 10, a space 175 is provided between the slotted permeate plate 122 and the permeate rim 124 which permits expansion and contraction of the components of the fluid separation assembly 110 resulting from the change in temperature. Assembled, the fluid separation assembly 110 may have a thickness ranging from 0.025 to 0.318 can (0.010 inches to 0.125 inches.) depending upon the thicknesses of the components employed.

When separating the hydrogen from a mixture of gas that includes hydrogen, the gas mixture is directed towards the permeable membranes 138 and 162 of the female membrane subassembly 114 end the male membrane subassembly 132, respectively, in the directions D and E, as shown in FIG. 11. For clarity, the permeable membranes 138 and 164 of the female and male membrane subassemblies 114 and 132, respectively are shown in FIG. 11 as being spaced from the first and second wire mesh membrane supports 118 and 128; however, in use, the permeable membranes 138 and 162 are in contact with the first and second wire mesh membrane supports 118 and 128 and are supported thereby. When the gas mixture containing hydrogen contacts the hydrogen permeable membranes 138 and 162, the hydrogen permeates through the permeable membranes 138 and 162, passes through the first and second wire mesh membrane supports 118 and 128 and enters the slotted permeate plate 122 where the hydrogen enters a specific slot 156 and to be directed toward the central axis C by the passageways formed by the slots 156. The central openings of the components of the fluid separation assembly 110, shown in FIG. 6, form a conduit 180 wherein the purified hydrogen is collected and transported to a desired location. The conduit 180 may have a diameter of between approximately 0.64 cm (0.25 inches) and 2.54 cm (1 inch). The diameter is determined by the components of the fluid separation assembly 110 and by the desire that the hydrogen flow be substantially unimpeded. The non-hydrogen gases in the gas mixture are prevented from entering the fluid separation assembly 110 by the fluid permeable membranes 138 and 162. The remainder of the hydrogen depleted gas mixture is directed around the exterior of the fluid separation assembly 110 in this embodiment.

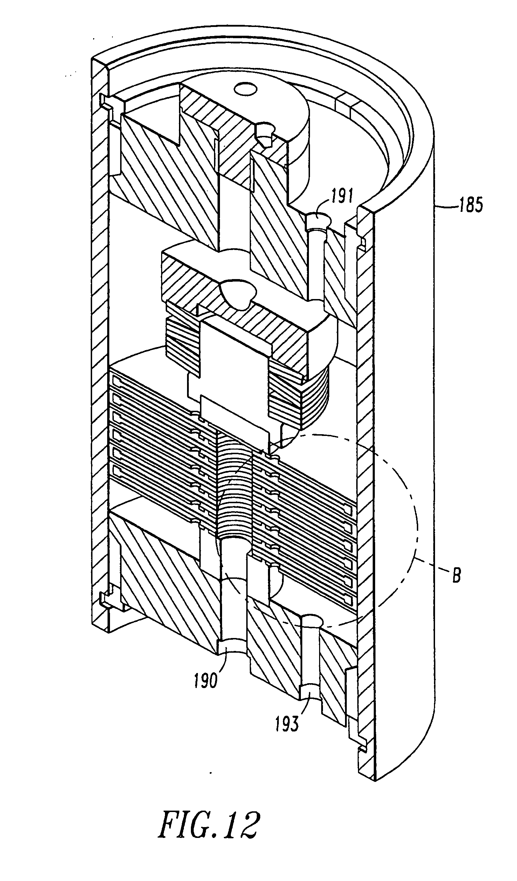

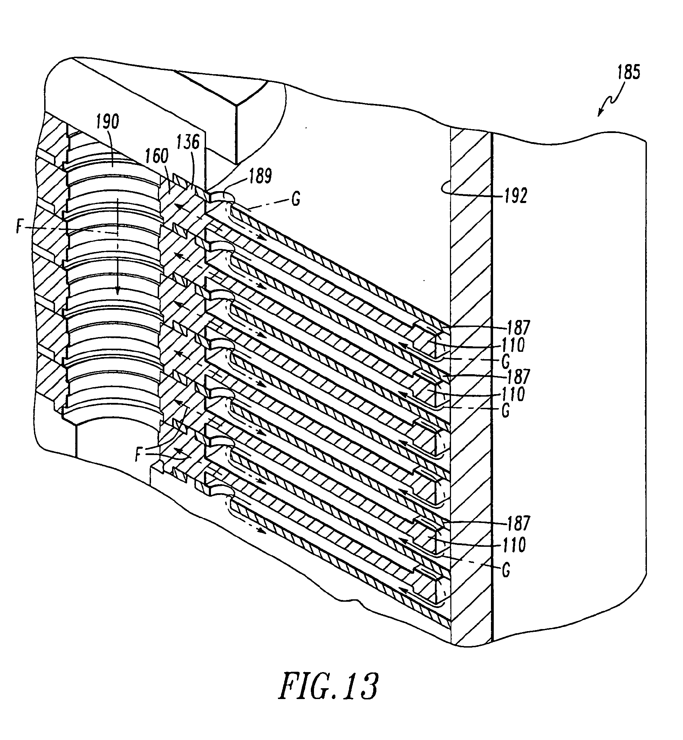

FIGS. 12 and 13 illustrate a module 185 employing several fluid separation assemblies 110 of the present invention, wherein FIG. 13 is an enlarged section B of the module 185. Each of the fluid separation assemblies 110 are shown as a solid body for clarity. However, each of the fluid separation assemblies 110 are the same as the fluid separation assemblies 110 shown in FIGS. 5-11. The module 185 has a feed gas inlet 191, a permeate outlet 190 and a discharge gas outlet 193. The fluid separation assemblies 110 are coaxially aligned. Distribution plates 187 are sandwiched between and separate the fluid separation assemblies 110. The distribution plates 187 are positioned on a shoulder of the gasket seats 136 in such a manner that they are positioned equidistant from the planar surface of the permeable membrane assemblies 114 and 132 in successive fluid separation assemblies 110. The distribution plates 187 are not fixedly connected to the gasket seats 136 and 160, but rather rest on a shoulder of the gasket seat 136. There is sufficient clearance between the central opening of the redistribution plate 187 and the shoulder on the female gasket seat 136 that the redistribution plates 187 and the fluid separation assemblies 110 are allowed to position themselves inside the wall of the membrane housing independently of the position of the fluid separation assemblies 110. Each distribution plate 187 has openings 189 therein. The fluid separation assemblies 110 are aligned one with the other such that each of the conduits 180 of the fluid separation assemblies 110 form a larger conduit 190. The path of the gas mixture containing hydrogen, represented by arrow G, enters the opening 189 and travels along the outer surface of the fluid separation assembly 110, wherein some of the hydrogen of the gas mixture is free to enter the fluid separation assembly 110 by the permeable membranes 138 and 162 and is directed along path F into the larger conduit 190 and the remaining gas mixture follows arrow G and serpentines through the passageway, formed by the distribution plates 187, the fluid separation assemblies 110 and the interior wall 192 of the module 185. As the gas mixture travels through the passageway, it contacts the outer surfaces of several other fluid separation assemblies 110, wherein more of the hydrogen remaining in the gas mixture permeates the permeable membrane 138 and 162 and follows the path F resulting in this purified hydrogen entering the larger conduit 190. The remainder of the hydrogen depleted gas mixture exits through a port 193 located at the opposite end of the module 185 after flowing over the entire stack of fluid separation membrane assemblies 110.

Although the present invention has been described in conjunction with the above described embodiments thereof, it is expected that many modifications and variations will be developed. The following claims cover all such modifications and variations.

## Claims

1. A fluid separation assembly (110) comprising:
a. a permeate plate (122) having a first surface, a second surface, a fluid outlet (158) and fluid passageways (156) extending from said fluid outlet (158) in the direction of the periphery of the permeable plate;
b. first and second wire mesh membrane supports (118,128) adjacent said first surface and said second surface of said permeate plate (122), respectively, each of said first and second wire mesh membrane supports (118,128) comprising a wire mesh comprised of a metal or a metal alloy and having a coaling that is an intermetallic diffusion bonding barrier, said intermetallic diffusion bonding barrier containing a compound selected from the group consisting of oxides, nitrides, borides, silicides, carbides and aluminides, and having an opening (152) aligned with said fluid outlet (158) of said permeate plate (122);
c. first and second hydrogen permeable membranes (138,162) comprising a metal or metal alloy, said first hydrogen permeable membrane (138) adjacent a surface of said first wire mesh membrane support (118) opposite said permeate plate (122), said second hydrogen permeable membrane (162) adjacent a surface of said second wire mesh membrane (128) opposite said permeate plate (122), each of said first and second permeable membranes (138,162) having an opening (150,181) aligned with said fluid outlet (158).

2. The fluid separation assembly (110) according to claim 1, wherein the permeate plate (122) is a slotted permeate plate.

3. The fluid separation assembly (110) of claim 2, wherein said openings of said hydrogen permeable membranes (138,162) and said membrane supports (118,128) and said outlet of said permeate plate (122) are centrally disposed and coaxially aligned to form a central conduit (180).

4. The fluid separation assembly (110) of claim 3, wherein said hydrogen permeable membranes (138,162), said membrane supports (118,128) and said permeate plate (122) are substantially flat and ring-shaped, said permeate plate (122) includes slots (156) defining said fluid passageways (156), and said slots (156) are radially disposed.

5. The fluid separation assembly (110) of claim 1, wherein each of said hydrogen permeable membranes (138,162) further comprises a gasket seat (136,160), a membrane gasket (140,164), and a washer (142,166) disposed about said opening (152,145,172) to form a first and second membrane subassembly (114,132), wherein said gasket seats (136,160), said membrane gaskets (140,164) and said washers (142,166) are connected to said hydrogen permeable membrane (138,162).

6. The fluid separation assembly (110) of claim 5, further comprising a hermetic seal, said hermetic seal comprising weld bead (171,173) connected to each of said first and second membrane subassemblies (114,132).

7. The fluid separation assembly (110) of claim 2, further comprising gaskets (116,130), one of said gaskets (116,130) adjacent each of said first and second wire mesh membrane supports (118,128).

8. The fluid separation assembly (110) of claim 7, further comprising a permeate rim (124) surrounding said permeate plate (122) and wherein said permeate rim (124), said first retainers (112), said second retainers (120), said permeable membranes (138,162) and said gaskets (116,130) are joined together at their peripheries, and wherein a gap (175) is defined between the said permeate plate (122) and said permeate rim (124).

9. The fluid separation assembly (110) according to claim 8, wherein said permeate rim (124), said first retainers (112), said second retainers (120), said permeable membranes (138,162) and said gaskets (116,130) are joined together by a weld bead (174) at their peripheries.

10. A fluid separation module (185), comprising a plurality of fluid separation assemblies (110) in accordance with claim 8 or claim 9.

11. The fluid separation assembly (110) of claim 1, wherein said hydrogen permeable membranes (138,162) comprise palladium or a palladium alloy.

12. The fluid separation assembly (110) of claim 1, wherein said wire mesh membrane supports (118,128) comprise stainless steel.

13. The fluid separation assembly (110) of claim 1, wherein the intermetallic diffusion bonding barrier contains one of an oxide and a nitride.

14. A method for separating a desired fluid from a fluid mixture, comprising:
providing a fluid separation assembly (110) as recited in any one of the preceding claims; and
contacting the hydrogen permeable membranes (138,162) of the fluid separation assembly (110) with the fluid mixture.

15. The method of claim 14, wherein the intermetallic diffusion bonding barrier is a thin film.

16. The method of claim 14, wherein the wire mesh membrane support is a stainless steel screen having a mesh count ranging from approximately 7 to 394 mesh per centimetre (19 to 1000 mesh per inch).

17. A method of making a fluid separation assembly, comprising the steps of
a. providing a fluid separation assembly (110) as recited in claim 8 or claim 9; and
b. hermetically sealing the first retainer (112), the gasket (116,130) and the second retainer (120) at their peripheries.

18. The method according to claim 17, wherein the intermetallic diffusion bonding barrier is thin film.

19. The method according to claim 18, wherein the wire mesh membrane support (118,128) is a stainless steel screen with a mesh count ranging from approximately 7 to 394 mesh per centimetre (19 to 1000 mesh per inch).

## Patentansprüche

1. Flüssigkeitstrenneinheit (110), umfassend:
a. eine Permeatplatte (122), die eine erste Oberfläche, eine zweite Oberfläche, einen Flüssigkeitsauslass (158) und Flüssigkeitsdurchgänge (156) hat, welche sich vom Flüssigkeitsauslass (158) in Richtung der Peripherie der Permeatplatte erstrecken;
b. erste und zweite Maschennetzmembranstützen (118, 128) neben der ersten Oberfläche bzw. der zweiten Oberfläche der Permeatplatte (122), wobei jede der ersten und zweiten Maschennetzmembranstützen (118, 128) ein Maschennetz umfasst, das ein Metall oder eine Metalllegierung umfasst und eine Beschichtung hat, welche eine intermetallische Diffusions-Kontaktsperrschicht ist, wobei die intermetallische Diffusions-Kontaktsperrschicht eine Verbindung enthält, die aus der Gruppe bestehend aus Oxiden, Nitriden, Boriden, Siliciden, Carbiden und Aluminiden ausgewählt ist, und die eine Öffnung (152) hat, welche zum Flüssigkeitsauslass (158) der Permeatplatte (122) ausgerichtet ist;
c. erste und zweite wasserstoffdurchlässige Membranen (138, 162), die ein Metall oder eine Metalllegierung, die erste wasserstoffdurchlässige Membran (138) neben einer Oberfläche der ersten Maschennetzmembranstütze (118) gegenüber der Permeatplatte (122), die zweite wasserstoffdurchlässige Membran (162) neben einer Oberfläche der Maschennetzmembranstütze (128) gegenüber der Permeatplatte (122) umfassen, wobei jede der ersten und zweiten durchlässigen Membranen (138, 162) eine Öffnung (150, 181) hat, welche zum Flüssigkeitsauslass (158) ausgerichtet ist.

2. Flüssigkeitstrenneinheit (110) nach Anspruch 1, wobei die Permeatplatte (122) eine geschlitzte Permeatplatte ist.

3. Flüssigkeitstrenneinheit (110) nach Anspruch 2, wobei die Öffnungen der wasserstoffdurchlässigen Membranen (138, 162) und die Membranstützen (118, 128) und der Auslass der Permeatplatte (122) zentral angeordnet und koaxial ausgerichtet sind, um einen Zentralkanal (180) zu bilden.

4. Flüssigkeitstrenneinheit (110) nach Anspruch 3, wobei die wasserstoffdurchlässigen Membranen (138, 162), die Membranstützen (118, 128) und die Permeatplatte (122) im wesentlichen eben und ringförmig sind, die Permeatplatte (122) Schlitze (156) umfasst, welche die Flüssigkeitsdurchgänge (156) definieren, und die Schlitze (156) radial angeordnet sind.

5. Flüssigkeitstrenneinheit (110) nach Anspruch 1, wobei jede der wasserstoffdurchlässigen Membranen (138, 162) ferner einen Dichtungssitz (136, 160), eine Membrandichtung (140, 164) und eine Unterlegscheibe (142, 166) umfasst, welche um die Öffnung (152, 145, 172) herum angeordnet ist, um eine erste und zweite Untereinheit (114, 132) zu bilden, wobei die Dichtungssitze (136, 160), die Membrandichtungen (140, 164) und die Unterlegscheiben (142, 166) mit den wasserstoffdurchlässigen Membranen (138, 162) verbunden sind.

6. Flüssigkeitstrenneinheit (110) nach Anspruch 5, die ferner einen hermetischen Verschluss umfasst, wobei der hermetische Verschluss, der eine Schweißraupe (171, 173) umfasst, mit jeder der ersten und zweiten Membran-Untereinheiten (114, 132) verbunden ist.

7. Flüssigkeitstrenneinheit (110) nach Anspruch 2, die ferner Dichtungen (116, 130) umfasst, wobei sich eine der Dichtungen (116, 130) neben jeder aus ersten und zweiten Maschennetzmembranstützen (118, 128) befindet.

8. Flüssigkeitstrenneinheit (110) nach Anspruch 7, die ferner einen Permeatrand (124) umfasst, welcher die Permeatplatte (122) umgibt, und wobei der Permeatrand (124), die ersten Halter (112), die zweiten Halter (120), die durchlässigen Membranen (138, 162) und die Dichtungen (116, 130) an ihren Peripherien miteinander verbunden sind und wobei ein Spalt (175) zwischen der Permeatplatte (122) und dem Permeatrand (124) definiert ist.

9. Flüssigkeitstrenneinheit (110) nach Anspruch 8, wobei der Permeatrand (124), die ersten Halter (112), die zweiten Halter (120), die durchlässigen Membranen (138, 162) und die Dichtungen (116, 130) an ihren Peripherien durch eine Schweißraupe (174) miteinander verbunden sind.

10. Flüssigkeitstrennmodul (185), das mehrere Flüssigkeitstrenneinheiten (110) nach Anspruch 8 oder Anspruch 9 umfasst.

11. Flüssigkeitstrenneinheit (110) nach Anspruch 1, wobei die wasserstoffdurchlässigen Membranen (138, 162) Palladium oder eine Palladiumlegierung umfassen.

12. Flüssigkeitstrenneinheit (110) nach Anspruch 1, wobei die Maschennetzmembranstützen (118, 128) Edelstahl umfassen.

13. Flüssigkeitstrenneinheit (110) nach Anspruch 1, wobei die intermetallische Diffusions-Kontaktsperrschicht ein Oxid oder ein Nitrid umfasst.

14. Verfahren zum Abtrennen einer gewünschten Flüssigkeit aus einer Flüssigkeitsmischung, umfassend:
Bereitstellen einer Flüssigkeitstrenneinheit (110), wie in einem der vorhergehenden Ansprüche angeführt; und
Herstellen eines Kontakts zwischen den wasserstoffdurchlässigen Membranen (138, 162) der Flüssigkeitstrenneinheit (110) und der Flüssigkeitsmischung.

15. Verfahren nach Anspruch 14, wobei die intermetallische Diffusions-Kontaktsperrschicht ein dünner Film ist.

16. Verfahren nach Anspruch 14, wobei die Maschennetzmembranstütze ein Edelstahlnetz ist, welches eine Maschenzahl im Bereich von etwa 7 bis 394 Maschen pro Zentimeter hat.

17. Verfahren zum Herstellen einer Flüssigkeitstrenneinheit, das die folgenden Schritte umfasst:
a. Bereitstellen einer Flüssigkeitstrenneinheit (110) nach Anspruch 8 oder Anspruch 9; und
b. hermetisches Abdichten des ersten Halters (112), der Dichtung (116, 130) und des zweiten Halters (120) an ihrer Peripherie.

18. Verfahren nach Anspruch 17, wobei die intermetallische Diffusions-Kontaktsperrschicht ein dünner Film ist.

19. Verfahren nach Anspruch 18, wobei die Maschennetzmembranstütze (118, 128) ein Edelstahlnetz ist, welches eine Maschenzahl im Bereich von etwa 7 bis 394 Maschen pro Zentimeter hat.

## Revendications

1. Ensemble de séparation de fluide (110) comprenant :
a. une plaque de perméation (122) ayant une première surface, une seconde surface, un refoulement de fluide (158) et des passages de fluide (156) s'étendant depuis ledit refoulement de fluide (158) dans la direction de la périphérie de la plaque de perméation ;
b. un premier et un second supports de membrane en grillage (118, 128) adjacents à ladite première surface et à ladite seconde surface de ladite plaque de perméation (122), respectivement, chacun desdits premier et second supports de membrane en grillage (118, 128) comprenant un grillage composé d'un métal ou d'un alliage de métal et comportant un revêtement qui est une barrière au soudage par diffusion intermétallique, ladite barrière au soudage par diffusion intermétallique contenant un composé choisi dans le groupe consistant en les oxydes, les nitrures, les borures, les siliciures, les carbures et les aluminures, et comportant une ouverture (152) alignée avec ledit refoulement de fluide (158) de ladite plaque de perméation (122) ;
c. une première et une seconde membranes perméables à l'hydrogène (138, 162) comprenant un métal ou alliage de métal, ladite première membrane perméable à l'hydrogène (138) étant adjacente à une surface dudit premier support de membrane en grillage (118) opposée à ladite plaque de perméation (122), ladite seconde membrane perméable à l'hydrogène (162) étant adjacente à une surface de ladite seconde surface en grillage (128) opposée à ladite plaque de perméation (122), chacune desdites première et seconde membranes perméables (138, 162) ayant une ouverture (150, 181) alignée avec ledit refoulement de fluide (158).

2. Ensemble de séparation de fluide (110) selon la revendication 1, dans lequel la plaque de perméation (122) est une plaque de perméation à fentes.

3. Ensemble de séparation de fluide (110) selon la revendication 2, dans lequel lesdites ouvertures desdites membranes perméables à l'hydrogène (138, 162) et lesdits supports de membrane (118, 128) et ledit refoulement de ladite plaque de perméation (122) sont disposés centralement et alignés coaxialement pour former un conduit central (180).

4. Ensemble de séparation de fluide (110) selon la revendication 3, dans lequel lesdites membranes perméables à l'hydrogène (138, 162), lesdits supports de membrane (118, 128) et ladite plaque de perméation (122) sont sensiblement plats et en forme d'anneau, ladite plaque de perméation (122) inclut des fentes (156) définissant lesdits passages de fluide (156), et lesdites fentes (156) sont disposées radialement.

5. Ensemble de séparation de fluide (110) selon la revendication 1, dans lequel chacune desdites membranes perméables à l'hydrogène (138, 162) comprend en outre un siège de joint (136, 160), un joint de membrane (140, 164), et une rondelle (142, 166) disposés autour de ladite ouverture (152, 145, 172) pour former un premier et un second sous-ensemble de membrane (114, 132), où lesdits sièges de joint (136, 160), lesdits joints de membrane (140, 164) et lesdites rondelles (142, 166) sont raccordés auxdites membranes perméables à l'hydrogène (138, 162).

6. Ensemble de séparation de fluide (110) selon la revendication 5, comprenant en outre un joint hermétique, ledit joint hermétique comprenant un cordon de soudure (171, 173) raccordé à chacun desdits premier et second sous-ensembles de membrane (114, 132).

7. Ensemble de séparation de fluide (110) selon la revendication 2, comprenant en outre des joints (116, 130), l'un desdits joints (116, 130) étant adjacent à chacun desdits premier et second supports de membrane en grillage (118, 128).

8. Ensemble de séparation de fluide (110) selon la revendication 7, comprenant en outre une couronne de perméation (124) entourant ladite plaque de perméation (122) et dans lequel ladite couronne de perméation (124), lesdits premiers éléments de retenue (112), lesdits seconds éléments de retenue (120), lesdites membranes perméables (138, 162), et lesdits joints (116, 130) sont joints ensemble à leur périphérie, et dans lequel un écartement (175) est défini entre ladite plaque de perméation (122) et ladite couronne de perméation (124).

9. Ensemble de séparation de fluide (110) selon la revendication 8, dans lequel ladite couronne de perméation (124), lesdits premiers éléments de retenue (112), lesdits seconds éléments de retenue (120), lesdites membranes perméables (138, 162), et lesdits joints (116, 130) sont joints ensemble par un cordon de soudure (174) à leur périphérie.

10. Module de séparation de fluide (185), comprenant une pluralité d'ensembles de séparation de fluide (110) selon la revendication 8 ou la revendication 9.

11. Ensemble de séparation de fluide (110) selon la revendication 1, dans lequel lesdites membranes perméables à l'hydrogène (138, 162) comprennent du palladium ou un alliage de palladium.

12. Ensemble de séparation de fluide (110) selon la revendication 1, dans lequel lesdits supports de membrane en grillage (118, 128) comprennent de l'acier inoxydable.

13. Ensemble de séparation de fluide (110) selon la revendication 1, dans lequel la barrière au soudage par diffusion intermétallique contient un élément parmi un oxyde et un nitrure.

14. Procédé de séparation d'un fluide souhaité d'un mélange de fluide, comprenant les étapes consistant à :
fournir un ensemble de séparation de fluide (110) tel qu'indiqué dans l'une quelconque des revendications précédentes ; et
mettre en contact les membranes perméables à l'hydrogène (138, 162) de l'ensemble de séparation de fluide (110) avec le mélange de fluide.

15. Procédé selon la revendication 14, dans lequel la barrière au soudage par diffusion intermétallique est un film mince.

16. Procédé selon la revendication 14, dans lequel le support de membrane en grillage est un crible en acier inoxydable ayant un nombre de mailles compris entre approximativement 7 et 394 mailles par centimètre (19 à 1 000 mailles par pouce).

17. Procédé de fabrication d'un ensemble de séparation de fluide, comprenant les étapes consistant à :
a. fournir un ensemble de séparation de fluide (110) tel qu'indiqué dans la revendication 8 ou la revendication 9 ; et
b. sceller hermétiquement le premier élément de retenue (112), le joint (116, 130) et le second élément de retenue (120) à leur périphérie.

18. Procédé selon la revendication 17, dans lequel la barrière au soudage par diffusion intermétallique est un film mince.

19. Procédé selon la revendication 18, dans lequel le support de membrane en grillage (118, 128) est un crible en acier inoxydable avec un nombre de mailles compris entre approximativement 7 et 394 mailles par centimètre (19 à 1 000 mailles par pouce).
